# EUROPÄISCHE PATENTANMELDUNG

(11) **EP 2 689 996 A1**
(43) Veröffentlichungstag der Anmeldung: **29.01.2014**
(21) Anmeldenummer: 13169948.0
(22) Anmeldetag: 31.05.2013
(51) Int. Cl.: B62K 25/04, B62J 1/06, B62K 19/36

(54) **Verfahren und Vorrichtung zur Steuerung einer Dämpfung eines Fahrrads**

(30) Priorität: 24.07.2012 DE 102012212949
(71) Anmelder: ROBERT BOSCH GMBH, 70442 Stuttgart (DE)
(72) Erfinder: Olems, Lars, 70374 Stuttgart (DE); Schott, Philipp, 71384 Weinstadt (DE)

(57) **Zusammenfassung**

Mit der vorliegenden Erfindung wird ein Verfahren sowie eine Steuereinheit (140, 300) beschrieben, mit der die Dämpfung eines oder mehrerer Dämpfungselemente (110, 120, 410) an einem durch den Fahrer antreibbares Fahrzeug, insbesondere ein Fahrrad (100), variiert werden kann. Erfindungsgemäß wird dabei die Antriebsleistung des Fahrers bzw. sein Verhalten beim Betrieb des Fahrzeugs erfasst, um in dessen Abhängigkeit die Dämpfung des Dämpfungselements (110, 120) zu steuern bzw. zu regeln. Dies wird dadurch erreicht, dass die Einstellung der Dämpfung in Abhängigkeit einer Leistungsgröße erfolgt, die die Antriebsleistung des Fahrers bzw. sein Verhalten repräsentiert.

## Beschreibung

Die Erfindung betrifft ein Verfahren zur Steuerung der Dämpfung eines oder mehrerer Dämpfungselemente sowie ein Steuergerät für ein von einem Fahrer antreibbares Fahrzeug, insbesondere ein Fahrrad, welches ein derartiges Verfahren ausführt.

### Stand der Technik

Bei der Fahrt eines Fahrzeugs über eine unebene Fahrbahn werden diese Unebenheiten von den Fahrzeuginsassen regelmäßig als Stöße wahr genommen. Um diese Übertragung zu verhindern oder sogar zu vermeiden, werden schon seit längerem Stoßdämpfer in die Fahrwerke eingebaut, die je nach eingestellter Federung gröbere und/oder feinere Stöße abfangen. Neben einer festen Einstellung der Dämpfungseigenschaften ist auch eine variable Einstellung möglich. So ist aus der DE 10 2007 051 226 A1 ein Verfahren bekannt, bei dem die Stoßdämpfer eines Fahrzeugs elektronisch angesteuert und somit die Dämpfungseigenschaft geregelt werden kann. So kann beispielsweise anhand der erkannten Straßenbeschaffenheit die Dämpfungseinstellung vorgenommen werden.

Beim klassischen Fahrradaufbau werden dagegen oftmals starre Fahrradgabeln verwendet, bei denen es durch Fahrbahnunebenheit zu Stoßübertragungen auf den Lenker und somit auf den Fahrer kommen kann. Mit der Verbreitung der Mountainbikes haben sich jedoch auch Federgabeln durchgesetzt, die die Stöße abfedern können. Neben der Einstellung direkt an der Federgabel gibt es auch die Möglichkeit, über eine meist hydraulische Leitung, die mit einem Hebel am Lenker verbunden ist, die Federwirkung individuell während der Fahrt einzustellen.

### Offenbarung der Erfindung

Mit der vorliegenden Erfindung wird ein Verfahren sowie eine Steuereinheit beschrieben, mit der die Dämpfung eines oder mehrerer Dämpfungselemente an einem durch den Fahrer antreibbares Fahrzeug, insbesondere ein Fahrrad, variiert werden kann. Erfindungsgemäß wird dabei die Antriebsleistung des Fahrers bzw. sein Verhalten beim Betrieb des Fahrzeugs erfasst, um in dessen Abhängigkeit die Dämpfung des Dämpfungselements zu steuern bzw. zu regeln. Dies wird dadurch erreicht, dass die Einstellung der Dämpfung in Abhängigkeit einer Leistungsgröße erfolgt, die die Antriebsleistung des Fahrers bzw. sein Verhalten repräsentiert.

Mit dieser Erfindung kann somit erreicht werden, dass die Dämpfungswirkung des wenigstens einen Dämpfungselements automatisch an die Fahrsituation angepasst wird. Dabei erkennt das System selbständig, inwieweit eine Erhöhung oder Reduzierung der Dämpfung notwendig ist, in dem das Verhalten des Fahrers z.B. beim Treten der Pedalen berücksichtigt wird. Dadurch lassen sich unnötige dämpfende Vorgänge reduzieren, z.B. bei der Fahrt bergauf. Statt die vom Fahrer aufgebrachte Kraft mittels der Dämpfungselemente zu kompensieren, kann der Fahrer somit mehr Kraft in den Antrieb bringen.

Zur besseren Erfassung der Antriebsleistung kann die Leistungsgröße in Abhängigkeit von dem Drehmoment erfasst werden, welches an einem am Fahrzeug befindlichen Tretlagers anliegt. Entsprechend können auch Sensoren verwendet werden, die in den Pedalen des Fahrzeugs eingearbeitet sind, um die Trittkraft des Fahrers zu erfassen.

Besonders vorteilhaft ist es, wenn zusätzlich der zeitliche Verlauf der Leistungsgröße erfasst wird. Somit kann gezielt zu bestimmten Zeitpunkten die Dämpfung erhöht oder reduziert werden. Mittels der Berücksichtigung der Fahrbahn kann darüber hinaus optional erkannt werden, ob eine Abfederung der Stöße durch eine unebene Fahrbahn hinderlich für die Übertragung der Muskelkraft des Fahrers auf den Antrieb ist. So kann beispielsweise bei einer ebenen Fahrt die Dämpfung reduziert werden, d.h. das Dämpfungselement tendenziell starrer eingestellt werden, da keine Stöße zu erwarten sind. Dagegen kann z.B. bei einer Berücksichtigung einer Neigungsinformation erkannt werden, ob eine Fahrt bergab vorliegt, so dass eine Abfederung von Stößen vorteilhaft ist.

In einer weiteren Ausgestaltung der Erfindung kann auch die Torsion bzw. Verdrehung des Fahrradrahmens erfasst werden, beispielsweise über Dehnungsmessstreifen, die im oder am Rahmen befestigt sind. Durch die Berücksichtigung dieser Torsion bzw. Verdrehung kann erkannt werden, ob der Fahrer beim Antrieb besonders viel Kraft aufwendet. In diesem Fall ist vorgesehen, die Dämpfung zu reduzieren, so dass weniger bis gar keine Energie mittels der Dämpfung abgeleitet wird.

Weiterhin kann vorgesehen sein, die Kraft des Fahrers, die dieser auf die Pedalen ausübt, bei der Einstellung bzw. Regelung der Dämpfung zu berücksichtigen. So kann die Dämpfung bei einem starken Antritt, d.h. bei einer starken Belastung der Pedale reduziert bzw. ganz auf Null geregelt werden. Demgegenüber kann die Dämpfung auch erhöht werden, wenn das System durch eine geringere Belastung der Pedale erkennt, dass der Fahrer keine große Kraft zum Antrieb aufbringt. Dies ist beispielsweise bei sogenannten Downhill-Fahrten regelmäßig der Fall, bei denen durch die Bergabfahrt in schneller Abfolge Stöße auf den Lenker übertragen werden können, ohne dass der Fahrer wesentlich zum Antrieb beiträgt.

In einer besonderen Ausgestaltung der Erfindung ist vorgesehen, die Pedalstellung zu erfassen, um die Zeitpunkte für die Anpassung der Dämpfung des Dämpfungselements festzustellen. So kann bei einer Pedalstellung im ersten oder dritten Quadranten davon ausgegangen werden, dass der Fahrer eine größere Kraft und somit ein höheres Drehmoment auf die Tretkurbel und den Antrieb aufbringt. In diesem Fall würde eine höhere Dämpfung, d.h. eine Kompensation der Schwingungen z.B. zwischen Lenker und Vorderrad kontraproduktiv sein. Daher sieht die Erfindung vor, in diesem Fall die Dämpfung zu reduzieren oder sogar auf Null zu setzen. Dagegen wird bei einer erkannten Pedalstellung im zweiten oder vierten Quadranten die Dämpfung erhöht, ggf. sogar bis zur maximalen Dämpfung angehoben.

Das Verfahren kann vorteilhafterweise in einer Steuereinheit ablaufen, welches an einem Fahrrad angebracht ist und mit dem Dämpfungselement (elektrisch) verbunden ist. Bei Anwendung der Erfindung im Rahmen eines Elektrofahrrads kann die Steuereinheit in die normale Steuerung des Antriebs integriert sein und ggf. Daten zu der Leistungsgröße direkt aus dieser Steuerung entnehmen.

Weitere Vorteile ergeben sich aus der nachfolgenden Beschreibung von Ausführungsbeispielen bzw. aus den abhängigen Patentansprüchen.

### Kurze Beschreibung der Zeichnungen

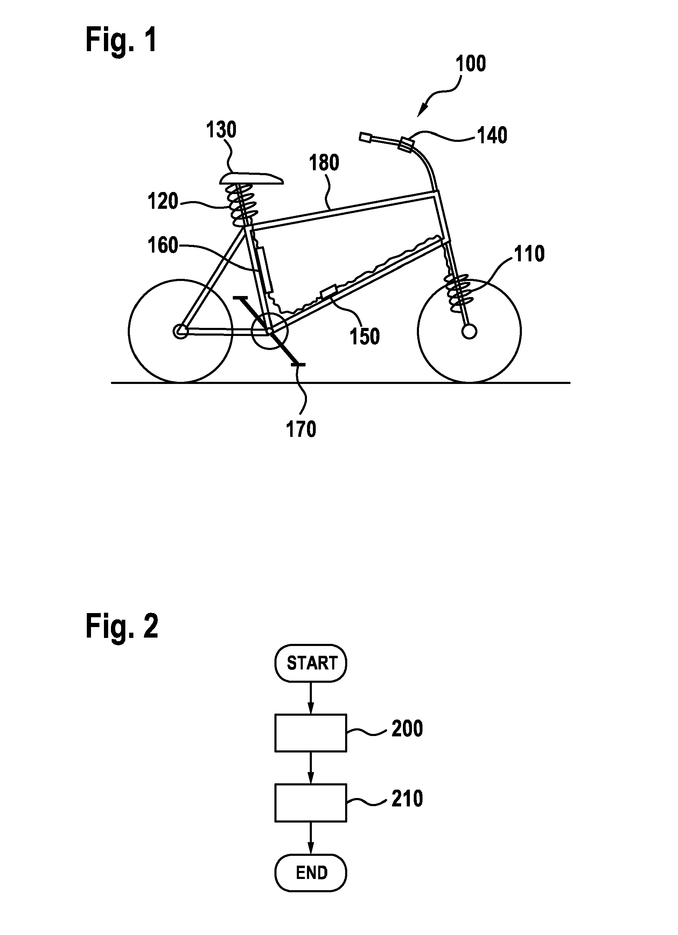

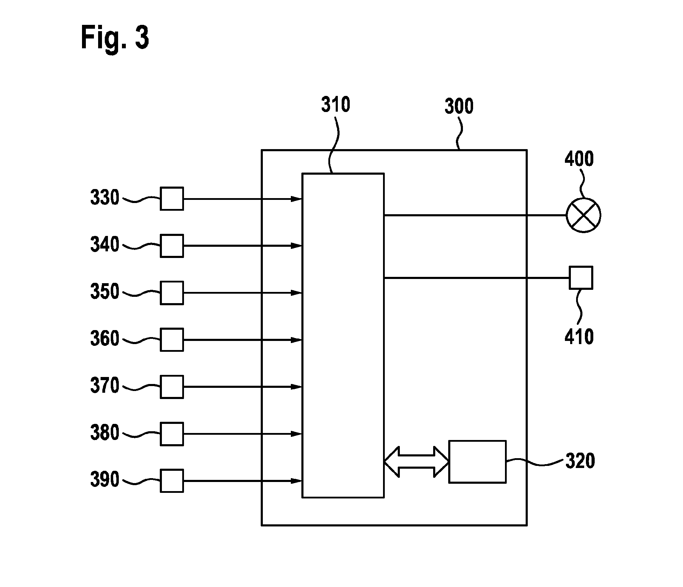

Die Figur 1 zeigt ein Fahrrad mit den für die Erfindung notwendigen Komponenten. In dem Flussdiagramm der Figur 2 wird das erfindungsgemäße Verfahren dargestellt. Anhand des Blockdiagramms in Figur 3 wird eine Ausführungsform der Erfindung beschrieben.

### Ausführungsformen der Erfindung

Zur Verhinderung der Übertragung von Stößen des Vorderrads auf den Lenker eines Fahrrads 100 und somit auf die Handgelenke bzw. Arme des Fahrers werden spezielle Federgabeln eingesetzt, die Stoßdämpfer mit Dämpfungselementen 110 enthalten. Der Zweck dieser Stoßdämpfer besteht darin, dass entsprechend einer elektrischen Schaltung ein (Hochpass-) Filter verwendet wird, der bestimmte (Stoß-) Frequenzen ausfiltert.

Die derzeit erhältlichen Dämpfungselemente verwenden üblicherweise Öle, die durch verstellbare Bohrungen geleitet werden, um die dämpfende Wirkung zu erzielen. Vereinzelt werden jedoch auch Dämpfungselemente angeboten, die mit Luft arbeiten. Während bei normalen Federgabeln mit Stoßdämpfern die Dämpfung manuell direkt am Dämpfungselement eingestellt werden kann, werden bei aufwändigeren Stoßdämpfern auch Einstellmöglichkeiten angeboten, die es ermöglichen auch während der Fahrt die Dämpfung zu verändern. Hierzu ist am Lenker ein Hebel angebracht, der über eine meist mechanische bzw. hydraulische Verbindung mit dem Dämpfungselement verbunden ist.

Eine weitere Möglichkeit, die Übertragung von Stößen während der Fahrt vom Fahrrad auf den Fahrer zu verhindern besteht darin, in der Befestigung des Sattels 130 ein Dämpfungselement 120, z.B. eine in Ihrer Dämpfung variierbare Feder anzubringen. Hierdurch kann verhindert werden, dass die Stöße, die beispielsweise bei einer sehr rauen Fahrbahn mit Schlaglöchern auftreten, auf die Wirbelsäule des Fahrers übertragen werden.

Schlussendlich kann auch vorgesehen sein, das Hinterrad gegenüber dem restlichen Rahmen 180 mit einem Gelenk anzubinden und zwischen dem Rahmen und der Hinterradaufhängung eine Federung anzubringen (nicht gezeigt). Mit einem derartigen Aufbau kann gerade bei Querfeldein-Fahrten (Crossfahrten) oder Downhill-Fahrten eine bessere Anpassung der Fahrt an den Untergrund erreicht werden. Auch bei dieser Federung ist denkbar, ein Dämpfungsglied einzubauen.

In der Figur 1 ist schematisch ein Fahrrad 100 dargestellt, bei dem ein Stoßdämpfer mit einem Dämpfungselement 110 sowie ein Sattel 130 mit einem Dämpfungselement 120 vorgesehen ist. Für den Fall eines Elektrofahrrads kann zusätzlich ein Akku 160 vorgesehen sein, welcher am Rahmen 180 befestigt ist. Am Lenker kann ein Tachometer, ein Bedien- und Steuerelement 140 (z.B. ein HMI - Human-Machine-Interface) oder ein sonstiges Anzeigegerät vorgesehen sein, welches die aktuellen Fahrdaten erfasst und anzeigt. Die aktuellen Fahrdaten können dabei über Sensoren 150 ermittelt werden, die beispielsweise am Rahmen, an den Rädern oder an der Pedale 170 bzw. in der Tretkurbel angebracht sind.

Das prinzipielle Vorgehen des erfindungsgemäßen Verfahrens ist im Flussdiagramm der Figur 2 dargestellt. In einem ersten einfachen Ausführungsbeispiel wird nach dem Start des Algorithmus in einem ersten Schritt 200 z.B. die Antriebsleistung des Fahrers oder das Antriebsmoment in Form einer Leistungsgröße erfasst, woraufhin in einem zweiten Schritt 210 das Dämpfungselement angesteuert wird. Dieser Algorithmus kann in der dargestellten Varianten einmalig durchlaufen werden und zu festen oder beliebigen Zeitpunkten oder zu vorgegebenen Situationen (z.B. bei erkannten Fahrbahnunebenheit oder eine Antriebsleistung des Fahrers, die einen bestimmten Schwellenwert überschreiten) neu gestartet werden. Alternativ kann jedoch auch eine Endlosschleife (ggf. mit gesonderter Abbruchbedingung, die Ruhen des Fahrrads während einer bestimmten Zeit) vorgesehen sein, mit deren Hilfe die Dämpfung fortwährend an die aktuelle Antriebsleistung angepasst werden kann.

Der wesentliche Kern der Erfindung besteht darin, dass die Dämpfung reduziert wird, wenn der Fahrer eine größere Antriebsleistung erzeugt. Dies kann sogar dazu führen, dass die Dämpfung gänzlich gesperrt wird, so dass beispielsweise der Lenker und das Vorderrad über die Federgabel starr verbunden sind. Dies könnte der Fall sein, wenn der Fahrer mit dem Fahrrad einen Anhang hinauf fährt und mittels Abstützung der Arme auf dem Lenker ein größeres Antriebsmoment auf die Pedalen und somit die Tretkurbel ausüben will. In diesem Fall wäre eine zusätzliche Dämpfung der Federgabel kontraproduktiv. Im gegenteiligen Fall könnte die Dämpfung auch erhöht oder sogar maximiert werden, wenn erkannt wird, dass vom Fahrer nur geringe Antriebsleistung erforderlich ist, z.B. bei einer Bergabfahrt, oder bei der Fahrt entsprechende Stöße zu erwarten sind, die vom Fahrer ferngehalten werden sollen.

In einem weiteren Ausführungsbeispiel kann im Schritt 200 vorgesehen sein, dass weitere Größen erfasst werden, die sowohl das Fahrverhalten als auch die Fahrumgebung repräsentieren. Aus diesen Größen kann dann im Schritt 210 eine optimierte Ansteuerung bzw. Regelung des Dämpfungselements erfolgen. So ist denkbar, dass über geeignete Sensoren 330 bis 390 die Trittkraft des Fahrers auf die Pedale 170, das erzeugte Drehmoment auf die Tretkurbel, die auf den Rahmen einwirkende Torsionskraft, die Pedalstellung, die Beschleunigung des Fahrrads oder andere Größe erfasst und bei der Ansteuerung berücksichtigt werden. Darüber hinaus kann auch der Zustand der Fahrbahn bzw. des Untergrunds berücksichtigt werden, indem beispielsweise die Neigung, die Stoßhäufigkeit oder allgemein die Unebenheit erfasst wird.

Die beschriebenen Verfahren können in einer separaten Steuereinheit oder in ein bereits bestehendes Anzeige-, Bedien- oder Steuergerät integriert werden. So kann beispielsweise bei einem Elektrofahrrad das HMI 140 dazu genutzt werden, gleichzeitig mit den bereits vorliegenden Leistungsdaten bzw. Fahrparametern die Steuerung der Dämpfungselement 110 bzw. 120 zu übernehmen. In diesem Fall ist auch die Energieversorgung für die Steuerung bzw. Regelung der Dämpfung durch den am Elektrofahrrad vorhandenen Akku 160 gesichert. Ansonsten ist dafür Sorge zu tragen, dass die Steuereinheit mit entsprechender Energie versorgt wird.

In einem weiteren Ausführungsbeispiel kann vorgesehen sein, sowohl die erfassten Sensorwerte der Fahrparameter als auch die Steuerungsinformationen für eine spätere Auswertung zu speichern oder per Funk (z.B. WiFi oder Bluetooth) an ein externes Gerät (z.B. ein Smartphone) zu übertragen. Durch diese Übertragung bzw. Speicherung können das Fahrprofil und die Sensorwerte bzw. die Steuerungsinformationen zu einem späteren Zeitpunkt ausgewertet werden, z.B. auf einem PC. Hierbei könnte auch die Verknüpfung mit aktuell erfassten GPS-Werten sinnvoll sein, um eine örtliche Zuordnung zu den Werten bzw. Informationen zu erreichen.

Eine mögliche Ausgestaltung der Erfindung ist in der Figur 3 anhand eines Blockschaltbilds dargestellt. Zentrales Element ist dabei die Steuereinheit 300, die eine Verarbeitungseinheit 310 sowie optional einen Speicher 320 aufweist, der mit der Verarbeitungseinheit 310 derart verbunden ist, dass Daten ausgetauscht werden können.

In die Verarbeitungseinheit 310 wird in einer Grundvarianten eine Leistungsgröße eingelesen, die von einem entsprechenden Sensor oder Erfassungsmittel 330 stammt. Aufgrund dieser Leistungsgröße wird in der Verarbeitungseinheit 320 eine Ansteuerung des Dämpfungselements 410 abgeleitet. Dies kann sowohl über zugrunde liegende Vergleichstabellen, Relationen aber auch über das Erreichen von Schwellenwerten erfolgen, die optional im Speicher 320 abgelegt sind. In einer besonderen Ausgestaltung kann vorgesehen sein, dass die Ansteuerung und/oder Änderung der Dämpfung auf ein Anzeigeinstrument 400, wie beispielsweise einem HMI zusätzlich für den Fahrer als Information bereitgestellt wird.

Wie bereits bei der Beschreibung des Verfahrens ausgeführt, können in weiteren Ausführungsformen auch weitere Größen bei der Ansteuerung bzw. Regelung des Dämpfungselements 410 berücksichtigt werden. So kann mit einem geeigneten Sensor 340 die Trittkraft des Fahrers auf die Pedale bzw. das erzeugte Drehmoment im Tretlager erfasst werden. Mit der Erfassung dieser Größe kann der zeitliche Verlauf des Antritts des Fahrers erfasst und bei der Ansteuerung berücksichtigt werden.

Weiterhin kann mittels der Trittkraft oder über einen entsprechenden Sensor 390 die Pedalstellung erkannt werden. So kann beispielsweise bei einer Stellung der Pedale im ersten und dritten Quadranten, in der die Kraft auf die Pedale 170 besonders groß ist, die Dämpfung reduziert werden. Demgegenüber kann bei einer Stellung der Pedale im zweiten und vierten Quadranten, in der der Fahrer erfahrungsgemäß weniger Kraft auf de Pedale ausüben kann, die Dämpfung erhöht oder sogar maximiert werden. Darüber hinaus besteht selbstverständlich auch die Möglichkeit, die Einstellung der Dämpfung von der (gemittelten) Kraft bzw. dem (gemittelten) Drehmoment abhängig zu machen, z.B. über Schwellenwerte.

Mit einem Sensor 360, der beispielsweise als Dehnungsmessstreifen im oder am Fahrradrahmen befestigt ist, können belastungsinduzierte Torsionen erkannt werden. Derartige Torsionen sind ein Anzeichen dafür, dass der Fahrer beim Treten die Spannungen ausnützt, die auftreten, wenn er durch das Abdrücken am Lenker seinen Körper und den Rahmen als Hebel zum kräftigeren Antritt in die Pedalen verwendet.

Daneben können auch Sensoren 380 verwendet werden, die die Fahrparameter berücksichtigen, wie beispielsweise die Beschleunigung. Ähnlich wie spezielle Sensoren 350 zur Erfassung des Untergrund oder Sensoren 370 zur Erfassung der Neigung können Beschleunigungssensoren 390 dazu verwendet werden, Informationen über den Untergrund zu erfassen, z.B. über die aktuell vorliegenden Stöße. So ist denkbar, die Dämpfung beim Vorliegen einer tendenziell eher ebenen Fahrbahnoberfläche zu reduzieren und somit die Verbindung zwischen Vorderrad und Lenker (oder auch Hinterrad/Rahmen oder Sattel/Rahmen) starr zu schalten, während bei einer rauen und unebenen Fahrbahnoberfläche die Dämpfung zu erhöhen bzw. zu maximieren.

Darüber hinaus kann auch das Dämpfungselement 410 selber Informationen liefern, die für die Ansteuerung relevant sein könnten. So kann ein entsprechender Sensor, z.B. ein Wegsensor im Dämpfungselement erfassen, welchen Hub bzw. welche Frequenz die gedämpften Stößen aufweisen. Mit diesen Informationen kann dann die Dämpfung auf die vorhandenen Stöße optimiert werden.

Selbstverständlich kann vorgesehen sein, dass für die Dämpfungselemente, die dem Vorderrad, dem Sattel und dem Hinterrad zugeordnet sind, bei gleichen Ausgangsvoraussetzungen unterschiedliche Dämpfungen zugewiesen werden können. So sind bestimmte Stöße für den Fahrer im Lenkerbereich störend, die beim Sattel nicht bemerkt werden oder gesundheitlich keine Probleme bereiten. Gerade beim Sattel kann aber vorgesehen sein, dass kritische Stöße auf das Fahrrad, die z.B. für die Wirbelsäule gesundheitsgefährdend sein können, durch eine gezielte automatische Dämpfung eliminiert oder zumindest reduziert werden.

In einem weiteren Ausführungsbeispiel kann auch vorgesehen sein, dass dem Lenker ein Dämpfungselement zugeordnet ist, welches gezielt in Abhängigkeit von der Antriebsleistung des Fahrers angesteuert werden kann.

Neben den oben beschriebenen Anwendungen der Erfindung bei einem Fahrrad kann die Erfindung auch bei jedem anderen, von einem Fahrer antreibbares Fahrzeug verwendet werden. So können die steuerbaren Dämpfungselemente ebenfalls u.a. in Roller, Tretautos, Mofas, Sackkarren, Rollatoren, Kinderwägen, Trolleys, Bobby-Cars und Rollstühle eingebaut werden. Wesentlich dabei ist jedoch, dass eine Größe erfasst werden kann, die die Antriebsleistung des Fahrerr bzw. Führers repräsentiert.

## Patentansprüche

1. Verfahren zur Steuerung der Dämpfung an einem durch den Fahrer antreibbarem Fahrzeug, insbesondere einem Fahrrad, wobei das Fahrzeug (100) wenigstens ein Dämpfungselement (110, 120) aufweist,
wobei vorgesehen ist, dass die Dämpfung des Dämpfungselement (110, 120, 410) variiert werden kann,
**dadurch gekennzeichnet, dass**
die Dämpfung in Abhängigkeit von einer die Antriebsleistung des Fahrers repräsentierenden Leistungsgröße verändert wird.

2. Verfahren nach Anspruch 1, **dadurch gekennzeichnet, dass** das Fahrzeug ein Tretlager aufweist, über das das Fahrzeug angetrieben werden kann, wobei die Leistungsgröße eine Drehmomentgröße repräsentiert, die das am Tretlager anliegende Drehmoment repräsentiert.

3. Verfahren nach Anspruch 1 oder 2, **dadurch gekennzeichnet, dass** die Dämpfung zusätzlich in Abhängigkeit des zeitlichen Verlaufs der Leistungsgröße verändert wird.

4. Verfahren nach einem der Ansprüche 1 bis 3, **dadurch gekennzeichnet, dass** die Dämpfung zusätzlich in Abhängigkeit einer Zustandsgröße verändert wird, die den Zustand der Fahrbahn repräsentiert, insbesondere deren Unebenheit.

5. Verfahren nach einem der Ansprüche 1 bis 4, **dadurch gekennzeichnet, dass** die Dämpfung zusätzlich in Abhängigkeit einer Torsionsgröße verändert wird, wobei vorgesehen ist, dass die Torsionsgröße die mechanische Belastung des Fahrzeugrahmens, insbesondere des Fahrradrahmens (180), insbesondere dessen Verdrehung bzw. Torsion repräsentiert.

6. Verfahren nach einem der Ansprüche 1 bis 5, **dadurch gekennzeichnet, dass** bei der Einstellung der Dämpfung der Antritt des Fahrers in am Fahrzeug (100) befindliche Pedalen (170) berücksichtigt wird, wobei insbesondere vorgesehen ist, dass die Dämpfung
• bei einer starken Belastung der Pedalen (170) reduziert bzw. auf Null gesetzt wird und
• bei einer schwachen Belastung der Pedalen (170) erhöht bzw. maximiert wird.

7. Verfahren nach Anspruch 6 **dadurch gekennzeichnet, dass** die Dämpfung
• bei einer Pedalstellung im ersten oder dritten Quadranten reduziert bzw. auf Null gesetzt wird und/oder
• bei einer Pedalstellung im zweiten oder vierten Quadranten erhöht bzw. maximiert wird.

8. Verfahren nach einem der vorhergehenden Ansprüche, **dadurch gekennzeichnet, dass** die Dämpfung
• erniedrigt bzw. auf Null gesetzt wird, wenn sich das Fahrzeug (100) auf einer unebenen Fahrbahn oder bergauf bewegt und/oder
• erhöht bzw. maximiert wird, wenn sich das Fahrzeug (100) nahezu horizontal oder bergab bewegt.

9. Steuereinheit (140, 300) zur Verwendung an einem durch den Fahrer antreibbares Fahrzeug (100), insbesondere ein Fahrrad (100), insbesondere mit einem Verfahren nach einem der Ansprüche 1 bis 8, wobei vorgesehen ist, dass die Steuereinheit (140, 300) die Dämpfung eines Dämpfungselements (110, 120) am Fahrrad (100) steuert und/oder regelt, **dadurch gekennzeichnet, dass** die Steuereinheit (140, 300) die Dämpfung in Abhängigkeit von einer erfassten die Antriebsleistung des Fahrers repräsentierenden Leistungsgröße verändert.

10. Steuereinheit (140, 300) nach Anspruch 9, **dadurch gekennzeichnet, dass** die Steuereinheit (140, 300) mittels einer Zustandsgröße den Zustand der Fahrbahn erfasst und das Dämpfungselement (110, 120) in Abhängigkeit von der Zustandsgröße ansteuert.

11. Steuereinheit (140, 300) nach einem der Ansprüche 9 oder 10, **dadurch gekennzeichnet, dass** die Steuereinheit (140) die Pedalstellung der am Fahrzeug (100) zum Antrieb verwendbaren Pedalen erfasst, wobei die Dämpfung des Dämpfungselements (110, 120, 410)
• bei einer Pedalstellung im ersten oder dritten Quadranten reduziert bzw. auf Null gesetzt wird und/oder
• bei einer Pedalstellung im zweiten oder vierten Quadranten erhöht bzw. maximiert wird.

12. Steuereinheit (140) nach einem der Ansprüche 9 bis 11, **dadurch gekennzeichnet, dass** die Steuereinheit (140) eine Größe erfasst, die die Neigung der Fahrbahn und/oder die Beschleunigung des Fahrzeugs (100) auf der Fahrbahn repräsentiert, wobei die Dämpfung des Dämpfungselement (110, 120, 410)
• erniedrigt bzw. auf Null gesetzt wird, wenn sich das Fahrzeug auf einer unebenen Fahrbahn oder bergauf bewegt und/oder
• erhöht bzw. maximiert wird, wenn sich das Fahrzeug nahezu horizontal oder bergab bewegt.

13. Fahrrad (100) mit einer Steuereinheit (140, 300) nach einem der Ansprüche 9 bis 12, **dadurch gekennzeichnet, dass** zur Erfassung der Antriebsleistung des Fahrers mittels eines Sensors (340)
• das Drehmoment im Tretlager, und/oder
• die Trittkraft des Fahrers auf die Pedale, insbesondere mittels Kraftsensoren, erfasst wird.

14. Fahrrad (100) mit einer Steuereinheit (140, 300) nach einem der Ansprüche 9 bis 12, **dadurch gekennzeichnet, dass** ein Sensor (360) vorgesehen ist, insbesondere in Form eines Dehnungsmessstreifens im oder am Fahrzeugrahmen, insbesondere am Fahrradrahmen, der eine Torsionsgröße erfasst, die die Verdrehung bzw. Torsion des Fahrzeugrahmens repräsentiert, wobei die Steuerung der Dämpfung des Dämpfungselements (110, 120) in Abhängigkeit von der Torsionsgröße erfolgt.

15. Fahrrad (100) mit einer Steuereinheit (140, 300) nach einem der Ansprüche 9 bis 12, **dadurch gekennzeichnet, dass** das Dämpfungselement (410) der Federgabel (110), der Hinterradaufhängung, dem Lenker und/oder dem Fahrradsattel (130) zugeordnet ist.
